# EUROPEAN PATENT SPECIFICATION

(11) **EP 1 051 234 B1**
(45) Date of publication and mention of the grant of the patent: **28.05.2003**
(21) Application number: 99901773.4
(22) Date of filing: 21.01.1999
(51) Int. Cl.: B01D 53/32, B01D 53/94, F01N 3/08, F01N 3/20, F01N 3/02

(54) **PLASMA ASSISTED PROCESSING OF GAS**
PLASMAUNTERSTÜTZTE GASBEHANDLUNG
TRAITEMENT DE GAZ A ASSISTANCE PLASMA

(30) Priority: 29.01.1998 GB 9801775
(43) Date of publication of application: 15.11.2000
(73) Proprietor: Accentus plc, Didcot, Oxfordshire OX11 0QJ (GB)
(72) Inventor: SEGAL, David, Leslie, Abingdon, Oxfordshire OX14 3AB (GB)
(74) Representative: Lofting, Marcus John
(86) International application number: GB9900212
(87) International publication number: WO99038603

(56) References cited:
- WO-A-91/03315
- WO-A-98/00221
- WO-A-98/02233
- DE-A- 3 644 090
- GB-A- 2 274 412
- US-A- 3 983 021
- US-A- 5 609 736
- US-A- 5 711 147
- SARACCO GUIDO ET AL.: "Simultaneous Abatement of Diesel Soot and Nox by Perovskite-type catalyst" CATALYST MATERIALS FOR HIGH-TEMPERATURE PROCESSES, vol. 73, 1997, pages 27-38, XP002100243 cited in the application

## Description

The present invention relates to the plasma-assisted processing of gaseous media and in particular to the reduction of the emission of carbonaceous and nitrogenous combustion products from the exhausts of internal combustion engines.

One of the major problems associated with the development and use of internal combustion engines is the noxious exhaust emissions from such engines. Two of the most deleterious materials, particularly in the case of diesel engines, are particulate matter (primarily carbon) and oxides of nitrogen (NOₓ). Increasingly severe emission control regulations are forcing internal combustion engine and vehicle manufacturers to find more efficient ways of removing these materials in particular from internal combustion engine exhaust emissions. Unfortunately, in practice, it is found that a number of techniques which improve the situation in relation to one of the above components of internal combustion engine exhaust emissions tend to worsen the situation in relation to the other. Even so, a variety of systems for trapping particulate emissions from internal combustion engine exhausts have been investigated, particularly in relation to making such particulate emission traps capable of being regenerated when they have become saturated with particulate material.

Examples of such diesel exhaust particulate filters are to be found in European patent application EP 0 010 384; US patents 4,505,107; 4,485,622; 4,427,418; and 4,276,066; EP 0 244 061; EP 0 112 634 and EP 0 132 166.

In all the above cases, the particulate matter is removed from diesel exhaust gases by a simple physical trapping of particulate matter in the interstices of a porous, usually ceramic, filter body, which is then regenerated by heating the filter body to a temperature at which the trapped diesel exhaust particulates are burnt off. In most cases the filter body is monolithic, although EP 0 010 384 does mention the use of ceramic beads, wire meshes or metal screens as well. US patent 4,427,418 discloses the use of ceramic coated wire or ceramic fibres.

GB patent 2,274,412 discloses a method and apparatus for removing particulate and other pollutants from internal combustion engine exhaust gases, in which the exhaust gases are passed through a bed of charged pellets of material, preferably ferroelectric, having high dielectric constant. In addition to removing particulates by oxidation, especially electric discharge assisted oxidation, there is disclosed the reduction of NOₓ gases to nitrogen, by the use of pellets adapted to catalyse the NOₓ reduction as exemplified by the use of barium titanate as the ferroelectric material for the pellets.

Also, US patents 3 983 021, 5 147 516 and 5 284 556 disclose the catalytic reduction of nitrogen oxides. However, US 3 983 021 is solely concerned with the reduction of NO to N in a silent glow discharge, the temperature of which is kept below a value at which the oxidation of N or NO to higher oxides of nitrogen does not occur. There is no mention of any simultaneous removal of hydrocarbons.

Although, so-called contact bodies are used in the process of US 3 983 021, and some of those disclosed may have some catalytic properties, catalysis does not appear to be a necessary feature of the process of US 3 983 021. Other surface properties, such as adsorption on large surface area materials, are the basis of the process of US 3 983 021.

US patent 5 147 516 does refer to the use of catalysts to remove NOₓ, but the catalytic materials involved are defined very specifically as being sulphur tolerant and deriving their catalytic activity from their form rather than their surface properties.

Also, the operating conditions are very tightly defined. There is no specific mention of the type, if any, of electric discharge involved. All that is disclosed is that the NOₓ removal depends upon electron-molecule interactions, facilitated by the structure of the 'corona-catalytic' materials not the inter-molecular interactions involved in the present invention. There is no mention of the simultaneous removal of hydrocarbons from the gas streams being treated by the invention of US 5 147 516.

US patent 5 284 556 does disclose the removal of hydrocarbons from internal combustion engine exhaust emissions. However, the process involved is purely one of dissociation in an electrical discharge of the so-called 'silent' type, that is to say, a discharge which occurs between two electrodes at least one of which is insulated. The device described is an open discharge chamber, not a packed bed device. Mention is made of the possible deposition of a NOₓ-reducing catalyst on one of the electrodes.

In a broader context, the precipitation of charged particulate matter by electrostatic forces also is known. However, in this case, precipitation usually takes place upon larger planar electrodes or metal screens.

The use of layered perovskite materials having the general formula A₂₋ₓA¹ₓB_{1-y}B¹_{y}O₄, or when A = A¹ and B = B¹, A₂BO₄, for the reduction of NOₓ by diesel soot particulates in the presence of excess oxygen has been discussed by Yosutake Teraoka et al in a paper 'Simultaneous Catalytic Removal of NOₓ and Diesel Soot Particulate Over Perovskite-related Oxides' Catalysis Today volume 27, (1996) 107 - 115 and Guido Saracco et al in a paper 'Simultaneous Abatement of Diesel Soot and NOₓ by Perovskite-type Catalysts' Ceramic Transactions volume 73, 27 - 38 (1997). However, in both cases, the papers are concerned solely with elucidating the chemical reactions involved and are not concerned with the design of practicable reactors for use with internal combustion engines. The materials studied are used passively, that is to say, apart from possibly being heated, they are subjected to no external influences.

According to the present invention in one of its aspects there is provided a plasma assisted reactor for the simultaneous removal of nitrogen oxides and carbonaceous combustion products from exhaust gases, comprising a reactor chamber adapted to be connected into a gas exhaust system, a gas permeable bed of an active material contained within the reactor, means for causing exhaust gases to pass through the bed of active material, and means for exciting into a plasma state exhaust gases passing through the bed of active material, characterised in that the bed of active material includes a mixed metal oxide material having the general formula A₂₋ₓA¹ₓB_{1-y}B¹_{y}O₄.

According to the present invention in another of its aspects there is provided a plasma assisted reactor for the simultaneous removal of nitrogen oxides and carbonaceous combustion products from internal combustion engine exhaust gases, comprising a reactor chamber adapted to be connected into the exhaust system of an internal combustion engine, a gas permeable bed of an active material contained within the reactor, means for causing exhaust gases to pass through the bed of active material, and means for exciting into a plasma state exhaust gases passing through the bed of active material, characterised in that the bed of active material includes a mixed metal oxide material having the general formula A₂₋ₓA¹ₓB_{1-y}B¹_{y}O₄.

The reactor can be separated into two components in the first of which the gaseous medium is excited into the plasma state and in the second of which the excited gaseous medium is contacted with the mixed metal oxide active material.

The exciting components of the reactor can be of any convenient form such as is disclosed in our earlier patent GB 2,274,412 or a corona discharge device or dielectric barrier device also known as a silent discharge device.

Preferably the bed of active material is in the form of an agglomeration of bodies of the active material in the form of spheres, regularly or irregularly shaped pellets, or hollow extrudates. The bodies of the active material may include a ceramic binder for example silica, alumina or titania or any combinations thereof, for example silica-titania. The binder may be gel-derived, particularly when spheres of the active material are to be made.

Many layered perovskite compositions can be produced when A, A ¹ are selected from the elements La, Sr, Ba and K, and B B¹ are selected from the elements Co, Mn, Cr, Cu, Mg and V. Examples are La_{1.8}Ba_{0.2}CuO₄; La_{1.7}Sr_{0.3}Cu_{0.9}V_{0.1}O₄; La_{1.9}K_{0.1}Cu_{0.7}Cr_{0.3}O₄; La_{1.8}Ba_{0.2}Cr_{0.7}V_{0.3}O₄ and La_{1.9}K_{0.1}Cu_{0.95}V_{0.05}O₄. The last of these is particularly suitable for use in performing the invention as is the basic material La₂CuO₄.

The invention will now be described, by way of example, with reference to the accompanying drawings in which,
Figure 1 is a longitudinal section of a reactor embodying the invention for the simultaneous removal of nitrogen oxides and particulate carbon from the exhaust emissions from an internal combustion engine, and
Figure 2 is a longitudinal section of a second embodiment of the invention.

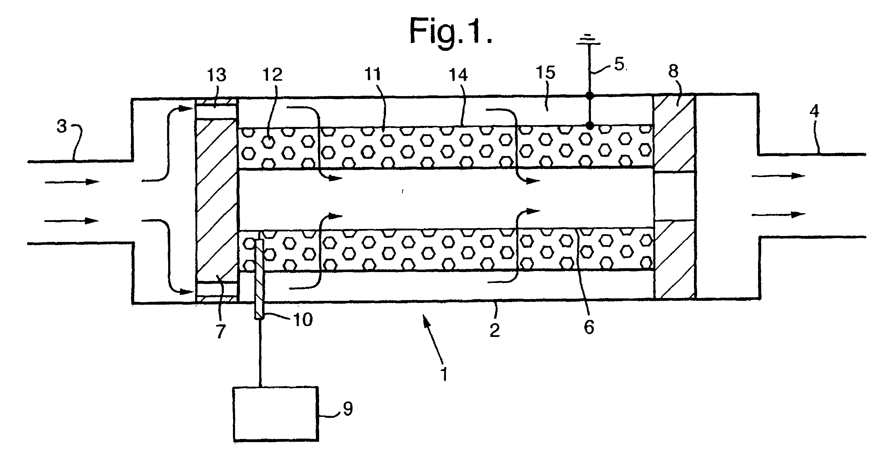

Referring to Figure 1 of the drawings, a reactor 1 for removing simultaneously NOₓ and particulate carbonaceous combustion products, from the exhaust from an internal combustion engine consists of a cylindrical stainless steel chamber 2 which has an inlet stub 3 and an outlet stub 4 by means of which it can be connected into the exhaust system of an internal combustion engine. The chamber 2 is arranged, in use, to be connected to an earthing point 5. Perforated cylindrical stainless steel inner and outer electrodes 6 and 14 are positioned coaxially within the chamber 2 by means of two electrically insulating supports 7 and 8. The space 11 bounded by the electrodes 6 and 14 and the supports 7 and 8 is filled, in this example, with a bed of pellets of active material illustrated highly diagrammatically at 12. The upstream end of the inner electrode 6 is closed off and is arranged to be connected via an insulating feedthrough 10 to a source 9 of an electrical potential sufficient to excite a non-thermal plasma in the exhaust gases in the interstices between the pellets 12. A convenient potential for this purpose is a potential of about 10 kV to 30 kV which may be a regularly pulsed direct potential or a continuously varying alternating potential, or may be an interrupted continuous direct potential. Typically we employ a potential of 20 kV per 30 mm of bed depth.

The support 7 nearer the inlet stub 3 has a number of axial holes 13 disposed regularly around its periphery so that incoming exhaust gases are constrained to pass into the space 15 between the outer electrode 14 and the chamber 2 of the reactor 1 and thence radially through the bed 12 of active material before passing through the inner electrode 6 and leaving the chamber 2 via the exhaust stub 4.

The bed 12 of active material consists of an agglomeration of spheres of a layered perovskite, such as La₂CuO₄. Another layered perovskite material from which the spheres can be made is the partially substituted material La_{1.9}K_{0.1}Cu_{0.95}V_{0.05}O₄.

The spheres include a ceramic binder such as silica alumina or titania or combinations of these where the binder can, for example, be derived from sol-gel materials or from fine powder. A typical proportion of binder material is three weight per cent. Also, other shapes can be used for the pellets, for example, they can be irregular shapes, or extrudates - the manufacture of the latter form of pellets can be facilitated by the inclusion of a ceramic binder such as a silica-titania gel in the precursor material from which the pellets are made.

Other mixed oxides having the general formula A₂₋ₓA¹ₓB_{1-y}B¹_{y}O₄ can be used, as can other ceramic binders, providing that they have dielectric constants which are sufficient to enable a plasma to be established and maintained in the exhaust gases in the interstices between the pellets, beads or extrudates which form the bed 12 in the reactor. Alternatively, or additionally, a dielectric barrier between the electrodes (6, 14) can be provided so that the reactor operates as a dielectric barrier type of reactor. Such a dielectric barrier is most conveniently provided in the form of a coating on one or both of the electrodes (6, 14). A further alternative is to include with the mixed oxide material a proportion of an additional material of high dielectric permittivity such as a barium titanate.

In the embodiment of the invention described above, the perovskite active material in the pellet bed 12 is used also as a dielectric medium, by means of which the exhaust gases passing through the reactor 1 can be subjected to sufficient electric stress to excite them to a plasma state. However, this is not a necessary feature of the invention and the exhaust gases can be subjected to a separate excitation process before being exposed to the perovskite material.

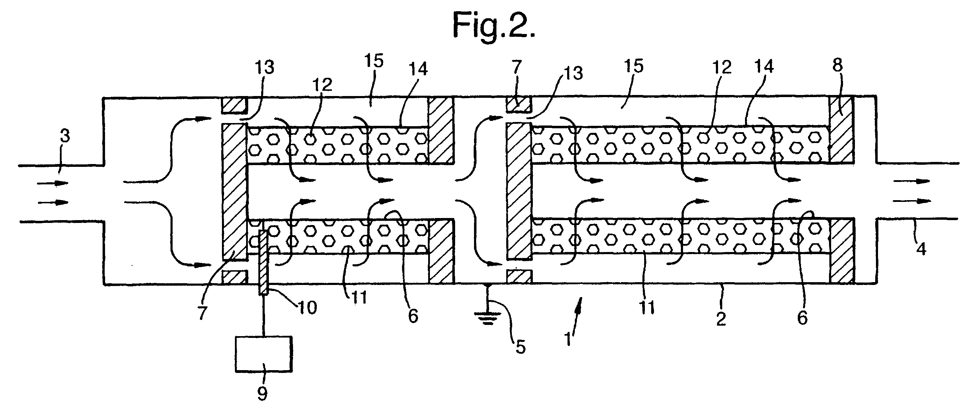

Figure 2 shows a second embodiment in which this is done, and in which those components which are similar to corresponding components of the first embodiment have the same reference numerals. The reactor chamber 1 is extended and contains a first excitation reactor similar to that described above, but in which the perovskite pellets 12 are replaced by pellets of a dielectric, preferably ferroelectric, material chosen to optimise the excitation of the exhaust gases, and a second reactor similar in layout to the first reactor, but in which there are no electrical connections to the bed 11 of pellets 12 of perovskite active material.

Other forms of excitation reactor involving a non-thermal plasma, such as a corona discharge reactor or dielectric barrier or silent discharge reactor can be used. Also the second reactor can be replaced by an axial flow monolithic gas permeable bed of perovskite active material.

By separating the reactor into two components, an excitation component and a treatment component, the excitation of the exhaust gases can be maximised, so increasing their susceptibility to the action of the perovskite material and the overall efficiency of the reactor system.

## Claims

1. A plasma assisted reactor for the simultaneous removal of nitrogen oxides and carbonaceous combustion products from exhaust gases, comprising a reactor chamber (11) adapted to be connected into a gas exhaust system, a gas permeable bed of an active material (12) contained within the reactor (11), means (7, 13, 14, 6, 8) for causing exhaust gases to pass through the bed of active material (12), and means (6, 9, 10, 14, 5) for exciting into a plasma state exhaust gages passing through the bed of active material (12), **characterised in that** the bed of active material (12) includes a mixed metal oxide material having the general formula A₂₋ₓA¹ₓB_{1-y}B¹_{y}O₄.

2. A plasma assisted reactor as claimed in claim 1 for the simultaneous removal of nitrogen oxides and carbonaceous combustion products from internal combustion engine exhaust gases, further **characterised in that** the reactor chamber (1) is adapted to be connected into the exhaust system of an internal combustion engine.

3. A reactor according to claim 2 **characterised in that** the components A A¹ of the mixed metal oxide material are selected from the group of elements comprising La, Sr, Ba and K and the components B B¹ of the mixed metal oxide material are selected from the group of elements comprising Co, Mn, Cr, Cu, Mg and V.

4. A reactor according to claim 3 **characterised in that** the mixed metal oxide is La₂CuO₄.

5. A reactor according to claim 3 **characterised in that** the mixed metal oxide active material 12 is selected from the group comprising La_{1.8}Ba_{0.2}CuO₄; La_{1.7}Sr_{0.3}Cu_{0.9}V_{0.1}O₄; La_{1.9}K_{0.1}Cu_{0.7}Cr_{0.3}O₄; La_{1.8}Ba_{0.2}Cr_{0.7}V_{0.3}O₄ and La_{1.9}K_{0.1}Cu_{0.95}V_{0.05}O₄.

6. A reactor according to claim 4 **characterised in that** the mixed metal oxide is La_{1.9}K_{0.1}Cu_{0.95}V_{0.05}O₄.

7. A reactor according to any of claims 2 to 6 **characterised in that** the bed (1) of active material is in the form of an agglomeration of bodies (12) of the active material in the form of spheres, regularly or irregularly shaped pellets or hollow extrudates.

8. A reactor according to claim 7 **characterised in that** the bodies (12) of active material include a ceramic binder material.

9. A reactor according to claim 8 wherein the ceramic binder material comprises silica, titania or alumina or any combination thereof.

10. A reactor according to claim 8 or claim 9 wherein the ceramic binder material is present in the proportion of about three weight per cent.

11. A reactor according to any of claims 8 to 10 wherein the bodies (12) of active material are in the form of spheres.

12. A reactor according to any preceding claim **characterised in that** the means (5, 6, 9, 10, 14) for exciting the exhaust gases into the plasma state is separate from the bed (11) of mixed metal oxide active material (12) and precedes the bed (11) of active mixed metal oxide material (12).

13. A reactor according to any of claims 1 to 11 **characterised in that** the means for exciting the gases to the plasma state comprises at least two electrodes (6, 14) in contact with the bed (11) of active material and means (9, 10) for applying to the electrode a potential difference sufficient to excite the exhaust gases to a plasma state in the interstices of the bed (11) of active material.

14. A reactor according to claim 13 further **characterised in that** a dielectric barrier is provided between the said two electrodes (6,14).

15. A reactor according to claim 14 further **characterised in that** the dielectric barrier is provided in the form of a coating on the surface of one or both of the said two electrodes (6, 14).

16. A reactor according to claim 13, further **characterised in that** a material of high dielectric permittivity is incorporated in the bed of active material.

17. A reactor according to any of claims 1 to 12 **characterised in that** the bed of active material (12) is in the form of a gas permeable monolith.

## Patentansprüche

1. Plasmaunterstützter Reaktor für die gleichzeitige Entfernung von Stickoxiden und kohlenstoffhaltigen Verbrennungsprodukten aus Abgasen, umfassend eine Reaktorkammer (11), angepasst an den Anschluss an ein Abgassystem, ein gaspermeables Bett aus einem aktiven Material (12), enthalten in dem Reaktor (11), Mittel (7, 13, 14, 6, 8) zum Veranlassen des Durchtritts des Abgases durch das Bett aus aktivem Material (12) und Mittel (6, 9, 10, 14, 5) zum Anregen des durch das Bett aus aktivem Material (12) hindurchtretenden Abgases in einem Plasmazustand, **dadurch gekennzeichnet, dass** das Bett aus aktivem Material (12) ein gemischtes Metalloxidmaterial mit der allgemeinen Formel A₂₋ₓA¹ₓB_{1-y}B¹_{y}O₄ umfasst.

2. Plasmaunterstützter Reaktor gemäß Anspruch 1 für die gleichzeitige Entfernung von Stickoxiden und kohlenstoffhaltigen Verbrennungsprodukten aus Abgasen eines Verbrennungsmotors, zusätzlich **dadurch gekennzeichnet, dass** die Reaktorkammer (1) an den Anschluss an das Abgassystem eines Verbrennungsmotors angepasst ist.

3. Reaktor gemäß Anspruch 2, **dadurch gekennzeichnet, dass** die Komponenten A, A¹ des gemischten Metalloxidmaterials ausgewählt sind aus der Gruppe von Elementen, umfassend La, Sr, Ba und K, und dass die Komponenten B, B¹ des gemischten Metalloxidmaterials ausgewählt sind aus der Gruppe von Elementen, umfassend Co, Mn, Cr, Cu, Mg und V.

4. Reaktor gemäß Anspruch 3, **dadurch gekennzeichnet, dass** das gemischte Metalloxid La₂CuO₄ ist.

5. Reaktor gemäß Anspruch 3, **dadurch gekennzeichnet, dass** das gemischte Metalloxid als aktives Material (12) ausgewählt ist aus der Gruppe, umfassend L_{1.8}Ba_{0.2}CuO₄; La_{1.7}Sr_{0.3}Cu_{0.9}V_{0.1}O₄; La_{1.9}K_{0.1}Cu_{0.7}Cr_{0.3}O₄; La_{1.8}Ba_{0.2}Cr_{0.7}V_{0.3}O₄ und La_{1.9}K_{0.1}Cu_{0.95}V_{0.05}O₄.

6. Reaktor gemäß Anspruch 4, **dadurch gekennzeichnet, dass** das gemischte Metalloxid La_{1.9}K_{0.1}Cu_{0.95}V_{0.05}O₄ ist.

7. Reaktor nach einem der Ansprüche 2 bis 6, **dadurch gekennzeichnet, dass** das Bett (1) aus aktivem Material in der Form einer Agglomeration von Körpern (12) des aktiven Materials in Form von Kügelchen, regelmäßig oder unregelmäßig geformten Pellets oder hohlen Extrudaten vorlegt.

8. Reaktor gemäß Anspruch 7, **dadurch gekennzeichnet, dass** die Körper (12) aus aktivem Material ein keramisches Bindemittelmaterial umfassen.

9. Reaktor gemäß Anspruch 8, worin das keramische Bindemittelmaterial Siliziumdioxid, Titanoxid oder Aluminiumoxid oder eine Kombination derselben umfasst.

10. Reaktor gemäß Anspruch 8 oder Anspruch 9, worin das keramische Bindemittelmaterial in einer Menge von etwa 3 Gew.-% vorhanden ist.

11. Reaktor gemäß einem der Ansprüche 8 bis 10, worin die Körper (12) aus aktivem Material in Form von Kügelchen vorliegen.

12. Reaktor gemäß einem der vorstehenden Ansprüche, **dadurch gekennzeichnet, dass** das Mittel (5, 6, 9, 10, 14) zum Anregen des Abgases in einen Plasmazustand von dem Bett (11) aus gemischtem Metalloxid als aktivem Material (12) getrennt ist und sich vor dem Bett (11) aus aktivem gemischtem Metalloxidmaterial (12) befindet.

13. Reaktor nach einem der Ansprüche 1 bis 11, **dadurch gekennzeichnet, dass** das Mittel zum Anregen des Gases in einen Plasmazustand mindestens 2 Elektroden (6, 14) in Kontakt mit dem Bett (11) aus aktivem Material sowie Mittel (9, 10) zum Anlegen einer ausreichenden Potentialdifferenz an die Elektroden umfasst, um die Abgase in einen Plasmazustand in den Zwischenräumen des Bettes (11) aus aktivem Material anzuregen.

14. Reaktor gemäß Anspruch 13, zusätzlich **dadurch gekennzeichnet, dass** zwischen den beiden Elektroden (6, 14) eine dielektrische Sperre bereitgestellt ist.

15. Reaktor gemäß Anspruch 14, zusätzlich **dadurch gekennzeichnet, dass** die dielektrische Sperre in Form einer Beschichtung auf der Oberfläche auf einer oder beiden der Elektroden (6, 14) bereitgestellt wird.

16. Reaktor gemäß Anspruch 13, zusätzlich **dadurch gekennzeichnet, dass** ein Material hoher dielektrischer Permittivität in das Bett aus aktivem Material eingearbeitet ist.

17. Reaktor gemäß einem der Ansprüche 1 bis 12, **dadurch gekennzeichnet, dass** das Bett aus aktivem Material (12) in Form eines gaspermeablen Monolithen vorliegt.

## Revendications

1. Un réacteur assisté plasma pour l'élimination simultanée d'oxydes d'azote et de produits de combustion carbonés issus de gaz d'échappement, comprenant une chambre de réacteur (11) conçue pour être reliée à un système d'échappement, un lit perméable aux gaz constitué d'une matière active (12) contenue à l'intérieur du réacteur (11), des moyens (7, 13, 14, 6, 8) destinés à faire passer les gaz d'échappement à travers le lit de matière active (12), et des moyens (6, 9, 10, 14, 5) destinés à exciter à l'état de plasma les gaz d'échappement qui passent à travers le lit de matière active (12), **caractérisé en ce que** le lit de matière active (12) comprend une matière d'oxydes métalliques mélangés correspondant à la formule générale A₂₋ₓA¹ₓB_{1-y}B¹_{y}O₄.

2. Un réacteur assisté plasma selon la revendication 1 pour l'élimination simultanée d'oxydes d'azote et de produits de combustion carbonés issus de gaz d'échappement de moteur à combustion interne, **caractérisé en outre en ce que** la chambre de réacteur (1) est conçue pour être reliée au système d'échappement d'un moteur à combustion interne.

3. Un réacteur selon la revendication 2, **caractérisé en ce que** les composants A A¹ de la matière d'oxydes métalliques mélangés sont choisis parmi le groupe d'éléments comprenant La, Sr, Ba et K, et les composants B B1 de la matière d'oxydes métalliques mélangés sont choisis parmi le groupe d'éléments comprenant Co, Mn, Cr, Cu, Mg et V.

4. Un réacteur selon la revendication 3, **caractérisé en ce que** le mélange d'oxydes métalliques est La₂CuO₄.

5. Un réacteur selon la revendication 3, **caractérisé en ce que** la matière active d'oxydes métalliques mélangés (12) est choisie parmi le groupe comprenant La_{1,8}Ba_{0,2}CuO₄ ; La_{1,7}Sr_{0,3}Cu_{0,9}V_{0,1}O₄ ; La_{1,9}K_{0,1}Cu_{0,7}Cr_{0,3}O₄ ; La_{1,8}Ba_{0,2}Cr_{0,7}V_{0,3}O₄ et La_{1,9}K_{0,1}Cu_{0,95}V_{0,05}O₄.

6. Un réacteur selon la revendication 4, **caractérisé en ce que** le mélange d'oxydes métalliques est La_{1,9}K_{0,1}Cu_{0,95}V_{0,05}O₄.

7. Un réacteur selon l'une quelconque des revendications 2 à 6, **caractérisé en ce que** le lit (1) de matière active est sous la forme d'une agglomération de corps (12) de matière active ayant la forme de sphères, de granules de forme régulière ou irrégulière, ou d'extrudats creux.

8. Un réacteur selon la revendication 7, **caractérisé en ce que** les corps (12) de matière active comprennent un liant céramique.

9. Un réacteur selon la revendication 8, dans lequel le liant céramique comprend de la silice, du titane ou de l'alumine, ou toute combinaison des trois.

10. Un réacteur selon la revendication 8 ou 9, dans lequel le liant céramique est présent en proportion d'environ trois pour cent en poids.

11. Un réacteur selon l'une quelconque des revendications 8 à 10, dans lequel les corps (12) de matière active sont sous la forme de sphères.

12. Un réacteur selon l'une quelconque des revendications précédentes, **caractérisé en ce que** les moyens (5, 6, 9, 10, 14) destinés à exciter les gaz d'échappement jusqu'à l'état plasma sont distincts du lit (11) de matière active d'oxydes métalliques mélangés (12) et le précèdent.

13. Un réacteur selon l'une quelconque des revendications 1 à 11, **caractérisé en ce que** les moyens destinés à exciter les gaz jusqu'à l'état plasma comprennent au moins deux électrodes (6, 14) en contact avec le lit (11) de matière active, et des moyens (9, 10) destinés à appliquer aux électrodes une différence de potentiel suffisante pour exciter les gaz d'échappement jusqu'à l'état plasma dans les interstices du lit (11) de matière active.

14. Un réacteur selon la revendication 13, **caractérisé en outre par le fait qu'**on ajoute une barrière diélectrique entre lesdites deux électrodes (6, 14).

15. Un réacteur selon la revendication 14, **caractérisé en outre en ce que** la barrière diélectrique est ajoutée sous la forme d'un revêtement sur la surface de l'une ou des deux dites électrodes (6, 14).

16. Un réacteur selon la revendication 13, **caractérisé en outre en ce qu'**un matériau de haute permittivité diélectrique est incorporé au lit de matière active.

17. Un réacteur selon l'une quelconque des revendications 1 à 12, **caractérisé en ce que** le lit de matière active (12) est sous la forme d'un monolithe perméable aux gaz.
